# EUROPÄISCHE PATENTSCHRIFT

(11) **EP 2 640 531 B1**
(45) Veröffentlichungstag und Bekanntmachung des Hinweises auf die Patenterteilung: **07.06.2017**
(21) Anmeldenummer: 11781759.3
(22) Anmeldetag: 18.10.2011
(51) Int. Cl.: C01B 25/02, C01B 25/08, C01B 25/01, C02F 11/18

(54) **VERFAHREN ZUM AUFARBEITEN VON ORGANISCHEN ABFALLSTOFFEN**
METHOD FOR RECYCLING ORGANIC WASTE MATERIAL
PROCÉDÉ DE TRAITEMENT DE DÉCHETS ORGANIQUES

(30) Priorität: 15.11.2010 AT 18752010
(43) Veröffentlichungstag der Anmeldung: 25.09.2013
(73) Patentinhaber: ICL Europe Coöperatief U.A., 1062 KR Amsterdam (NL)
(72) Erfinder: EDLINGER, Alfred, A-6780 Bartholomäberg (AT)
(74) Vertreter: Ter Meer Steinmeister & Partner
(86) Internationale Anmeldenummer: PCT/EP2011/068157
(87) Internationale Veröffentlichungsnummer: WO 2012/065798

(56) Entgegenhaltungen:
- EP-A1- 0 707 083
- EP-A1- 2 228 146
- WO-A1-03/070651

## Beschreibung

Die Erfindung betrifft ein Verfahren zum Aufarbeiten von organischen Abfallstoffen enthaltend Phosphoroxide und Metalloxide, insbesondere zum Aufarbeiten von Klärschlamm.

Die Aufarbeitung von organischen Abfallstoffen und insbesondere von Klärschlamm, Trockenschlämmen, Klärschlammasche und Tiermehl ist ein wichtiger Aspekt der Umwelttechnologie und gestaltet sich aufgrund der komplexen Zusammensetzung der betreffenden Abfallstoffe insbesondere dann besonders schwierig, wenn neben weitgehend unbedenklichen Naturstoffen auch Umweltgifte, wie beispielsweise Schwermetalle, Halogene, Pestizide, Herbizide, Antibiotika, kanzerogene und mutagene Schadstoffe, chlorierte Kohlenwasserstoffe, polychlorierte Biphenyle, Hormone und Endokrine in den Abfallstoffen enthalten sind. Unter den im Klärschlamm enthaltenen Metallen sind neben den Schwermetallen Kupfer, Zink und Kadmium auch verschiedene Oxide von Kalzium, Silizium und Aluminium zu nennen, wobei insbesondere das Vorliegen von Eisenoxiden die Gewinnung von reinem Phosphor verunmöglicht, da sich Phosphor mit Eisen zu Phosphoreisen verbindet und somit in Anwesenheit von Eisen nicht rein gewonnen werden kann. Der Gehalt an verschiedenen Metallen und Schwermetallen verhindert zumeist die direkte Verwendung von Klärschlamm als Düngemittel, weshalb Klärschlamm in großen Mengen deponiert werden muss. Die Deponierung von Klärschlamm führt jedoch dazu, dass die enthaltenen Wertstoffe und insbesondere der nicht nur für die Düngemittelindustrie interessante Phosphor nicht genutzt werden können. Das Dokument JPH10337549 wird als nächstliegender Stand der Technik angesehen und zeigt ein gattungsbildendes Verfahren mit oxidativer Verbrennung einer Mischung von organischen und anorganischen Abfällen. Aus EP0707083A1 ist ein dreistufiges Verfahren zur Müllaufbereitung bekannt. Nach einer Schmelzoxidation mit einer anschließenden schwachen Reduktion der mineralischen Schmelze über einem Stahlbad wird nachfolgend über einem Kohlenstoff gesättigten Eisenbad stark reduziert. Eine auf die Stöchiometrie ausgelegte Chloridzugabe findet nicht statt. Es wird bewusst Eisen zugesetzt, um die siderophilen Elemente zu reduzieren. Somit kann kein elementarer Phosphor freigesetzt werden.

Aus EP2228146A1 ist ein Verfahren bekannt, bei dem Klärschlamm induktiv erhitzt wird. Bei den angegebenen Prozesstemperaturen kann keine Schmelze gebildet werden, so dass ein Sinterprozess vorliegt. Für die Gewinnung von Phosphor in möglichst reiner Form ist in diesem Zusammenhang jedoch eine Schmelzphase erforderlich.

Es ist somit Aufgabe der vorliegenden Erfindung, aus organischen Abfallstoffen und insbesondere aus Klärschlamm Phosphor bzw. dessen Derivate in möglichst reiner Form als Wertstoff gewinnen zu können und die enthaltenen Metalle abzutrennen.

Zur Lösung dieser Aufgabe werden die Abfallstoffe der eingangs genannten Art mit Chlorträgern versetzt und anschließend bei einem Luftverhältnis von 0,85 ≤ λ ≤ 1,6 thermisch behandelt und partiell oxidiert, die gebildeten Metallchloride abgezogen und wiedergewonnen und die nach dem Abziehen der Metallchloride verbleibende Fraktion wird einer Reduktion zur Gewinnung von elementarem Phosphor unterzogen.

Die Maßnahme, dass die aufzuarbeitenden Abfallstoffe mit Chlorträgern versetzt werden, führt dazu, dass beim anschließenden Oxidationsschritt, der bei erhöhten Temperaturen durchgeführt wird, die Metalle in Metallchloride umgewandelt werden, die überaus flüchtig sind und deshalb mit der Gasphase abgezogen werden können. Die verbleibende Fraktion wird erfindungsgemäß in der Folge einer Reduktion unterworfen, bei der aus den Phosphoroxiden reiner Phosphor gewonnen wird. Mit der erfindungsgemäßen Verfahrensweise werden somit die oben genannten Metalle und Metalloxide und insbesondere die Eisenoxide als Metallchloride abgetrennt, bevor der Phosphor durch Reduktion elementar gewonnen wird.

Bevorzugt wird die thermische Behandlung bei Temperaturen von 1300-1600°C durchgeführt.

Gemäß einer bevorzugten Vorgehensweise ist das erfindungsgemäße Verfahren dahingehend weitergebildet, dass zu den Abfallstoffen zusätzlich Kalk zugesetzt wird. Kalk bildet beim Verfahren gemäß der vorliegenden Erfindung mit den anorganischen Verbrennungsprodukten eine bei den oben genannten Prozesstemperaturen flüssige Schlackenschmelze, wobei die Menge an zugegebenem Kalk dem SiO2-Gehalt der Verbrennungsprodukte angepasst sein soll und insbesondere ein Verhältnis 0,85 ≤ CaO/SiO2 ≤ 1,3 sicherstellen soll. Die gewonnene Schlacke kann nutzbringend in der Zementindustrie eingesetzt werden.

Um einen hohen Wirkungsgrad beim Oxidationsschritt zu erreichen, werden die Abfallstoffe möglichst feinteilig in den Oxidationsschritt eingebracht. Gemäß der vorliegenden Erfindung ist das Verfahren daher mit Vorteil dahingehend weitergebildet, dass die mit den Chlorträgern versetzten Abfallstoffe zur Oxidation mit einem Trägergas über einen Zyklon in eine Brennkammer eingestoßen werden, wobei bevorzugt als Trägergas ein sauerstoffhaltiges Gas, insbesondere Heißwind eingesetzt wird. Eine derartige Verfahrensführung ist beispielsweise mit einer Vorrichtung gemäß der WO 03/070651 A1 durchführbar, die bereits erfolgreich für das Schmelzen von Stäuben eingesetzt wurde. Bei dieser Einrichtung ist der Zyklon der eigentlichen Brennkammer vorgeschaltet, und das Material bzw. die Abfallstoffe werden mit dem Trägergas tangential eingeblasen und in eine rotierende Bewegung versetzt, sodass die Abfallstoffe in die nachfolgende Brennkammer mit einem definierten Drall eingeführt werden. Beim Eintritt in die Brennkammer kann die rotierende Strömung weitestgehend aufrechterhalten werden, sodass über eine relativ kurze axiale Länge in der Brennkammer eine relativ lange Kontaktzeit mit der Flamme gewährleistet ist und daher eine relativ lange Reaktionszeit für die Oxidation zur Verfügung steht.

Eine besonders vorteilhafte synergistische Wirkung mit anderen Industriezweigen und Bereichen der Abfallindustrie ergibt sich dann, wenn das Verfahren, wie es einer bevorzugten Ausführungsform der vorliegenden Erfindung entspricht, dahingehend weitergebildet ist, dass die Chlorträger aus der Gruppe bestehend aus chlorhältigen Kunststoffen, Alkalichloriden, Erdalkalichloriden, Zementofenstaub und Stahlwerksstäuben gewählt sind. Chlorhältige Kunststoffe stehen beispielsweise in Form von PVC zur Verfügung, und Zementofenstaub und Stahlwerkstäube werden in den betreffenden Industriezweigen an sich als problematischer Abfallstoff angesehen, sodass diese Stoffe zur Durchführung des erfindungsgemäßen Verfahrens überaus kostengünstig zur Verfügung stehen und einer nützlichen Verwendung zugeführt werden können.

Gemäß der vorliegenden Erfindung folgt nach dem Oxidationsschritt und dem Abziehen der beim Oxidationsschritt gebildeten Metallchloride ein Reduktionsschritt der verbleibenden Fraktion, die den Phosphor enthält, wobei hierbei bevorzugt derart vorgegangen wird, dass die Reduktion der nach dem Abziehen der Metalloxide verbleibenden Fraktion unter Verwendung einer zumindest teilweise induktiv beheizten Säule mit stückigem Koks und/oder Graphit durchgeführt wird und der entweichende elementare Phosphor abgezogen wird. Gleichzeitig wird das gebildete Reduktionsgas (Co, H₂) abgezogen. Dieses Gas kann nach der Phosphorkondensation als Reduktions- oder Brenngas, beispielsweise als Energielieferant für die thermische Behandlung der Abfallstoffe eingesetzt werden. Die Reduktion auf einer zumindest teilweise induktiv beheizten Säule ist beispielsweise aus der WO 2006/079132 A1 bekannt, wobei diesem Dokument auch eine entsprechende Vorrichtung zur Durchführung eines Reduktionsschritts entnommen werden kann. Mit einer zumindest teilweise induktiv erhitzten Kokssäule lassen sich überaus hohe Temperaturen erzielen, wobei eine reduzierende Atmosphäre eingestellt werden kann, da der Kohlenstoff der Säule nicht mit Verbrennungsprodukten und insbesondere nicht mit CO₂ im thermischen Gleichgewicht steht. Anders als beim dem in der WO 2006/079132 A1 gezeigten Verfahren wird bei der Verwendung einer induktiv erhitzten Säule der Wertstoff jedoch nicht in der Schmelze erhalten, sondern mit dem Reaktionsgas abgezogen und kann, wie dies einer bevorzugten Ausführungsform der vorliegenden Erfindung entspricht, durch Quenchen als weißer Phosphor gewonnen werden.

Gemäß einer bevorzugten Ausführungsform der vorliegenden Erfindung wird beim Reduktionsschritt derart vorgegangen, dass das Redoxpotential der Säule durch Einblasen von Gasen geregelt und die Temperatur der Säule durch Regelung der elektrischen Leistung und durch Einblasen von Gasen eingestellt wird. Auf diese Weise können das Redoxpotential und die Temperatur derart geregelt werden, dass nur der gewünschte Phosphor reduziert wird und andere Oxide in der restlichen Fraktion verbleiben.

Das erfindungsgemäße Verfahren dient der Trennung der Metalle bzw. Metalloxide von Phosphor vor dem Reduktionssschritt, um die unkontrollierte Bildung von Phosphoreisen zu verhindern. Wenn aber der in den Abfallstoffen enthaltene Phosphor mit dem erfindungsgemäßen Verfahren rein gewonnen wurde, kann die Gewinnung von reinem Phosphoreisen durchaus wünschenswert sein, da eine Oxidation von Phosphoreisen zu Eisenphosphat führt, welches ein wertvoller Ausgangsstoff für die Herstellung von Lithiumeisenphosphat ist. Lithiumeisenphosphat wiederum gewinnt zusehends als Kathode in Lithium-Ionen Batterien an Bedeutung. Das erfindungsgemäße Verfahren ist daher bevorzugt dahingehend weitergebildet, dass die nach dem Abziehen der Metallchloride verbleibende Fraktion zur Gewinnung von Phosphoreisen mit Eisen bzw. Eisenoxid versetzt wird. Das erforderliche Lithium kann beispielsweise aus Klinkerofenstaub gewonnen werden.

Ein weiterer Aspekt der Erfindung sieht eine alternative, vereinfachte Verfahrensführung vor, bei der die genannten Abfallstoffe mit Kalk einem induktiv beheizten Koks- und/oder Graphitbett aufgegeben werden. Das dabei entstehende Abgas wird einer fraktionierten Kühlung unterzogen: bei 400-600°C fallen die Schadstoffe enthaltend Chlorid aus und können mittels eines Zyklons oder Heißgasabscheiders abgetrennt werden. Eine weitere Abkühlung, beispielsweise in einer Wasserquenche führt zur Kondensation von Phosphor. Das verbleibende Gas kann nach einer eventuellen Trocknung als Brenn- und/oder Reaktionsgas verwendet werden.

Die Erfindung wird im Folgenden anhand eines in der Zeichnung schematisch dargestellten Ausführungsbeispiels näher erläutert. In dieser zeigen Fig. 1 eine Vorrichtung zur Durchführung des erfindungsgemäßen Verfahrens dargestellt. Die Figur 2 zeigt ein Blockdiagramm eines vereinfachten Verfahrensablaufes. Die Figur 3 zeigt eine Reduktionsvorrichtung zur Durchführung des vereinfachten Verfahrens.

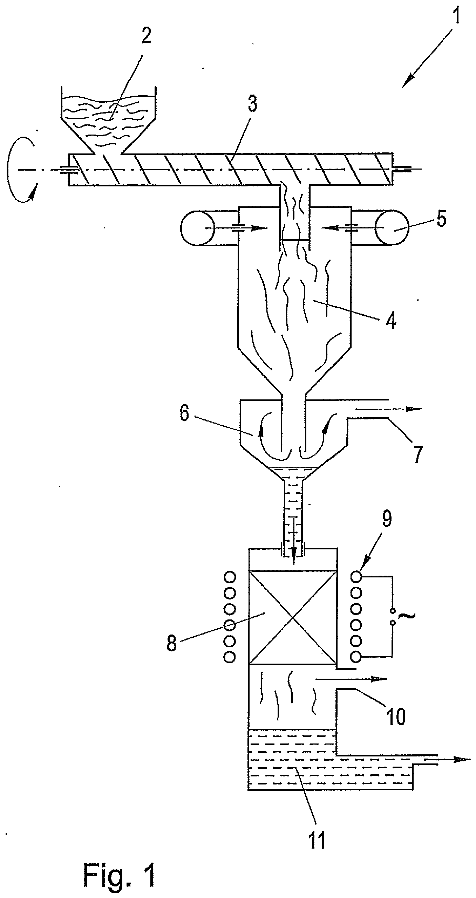

In Fig. 1 ist mit 1 eine Vorrichtung zur Durchführung des erfindungsgemäßen Verfahrens bezeichnet. Die Abfallstoffe werden mit Chlorträgern und/oder Kalk versetzt und an der Aufgabestelle 2 aufgegeben. Mit 3 ist eine Dosiervorrichtung bezeichnet, beipielsweise in Form einer Förderschnecke, mit der die Stoffe in das Innere einer Brennkammer 4 gefördert werden. Über eine Ringleitung 5, die an geeigneten Stellen in die Brennkammer 4 mündet, können zur Einstellung eines geeigneten Luftverhältnisses Luft, O₂ und ggf. auch gasförmige Chlorträger eingebracht werden. Auf die Brennkammer folgt eine Zyklon bzw. Tropfenabscheider 6, in dem die Schmelze mit dem partiell oxidierten Phosphor vom Produktgas abgetrennt wird. Das Produktgas bzw. Reduktionsgas, welches neben den Metallchloriden auch CO₂, CO, H₂O und H₂ enthält, wird über die Austragsleitung 7 abgezogen. Die Schmelze wird ggf. unter Zugabe von 02 und Kohlenstoffträgern einem Koks- und/oder Graphitbett 8 aufgegeben. Das Koks- und/oder Graphitbett 8 wird mittels der Spule 9 induktiv beheizt. In dem Bett 8 erfolgt die Reduktion zu elementarem Phosphor, der über die Öffnung 10 abgezogen wird und in der Folge kondensiert und als weißer Phosphor gewonnen werden kann. In einem Tundish 11 sammelt sich die verbleibende Schlackenschmelze, die nach dem Abstich 12 ggf. zu Phosphoreisen und Eisenphosphat weiterverarbeitet werden kann.

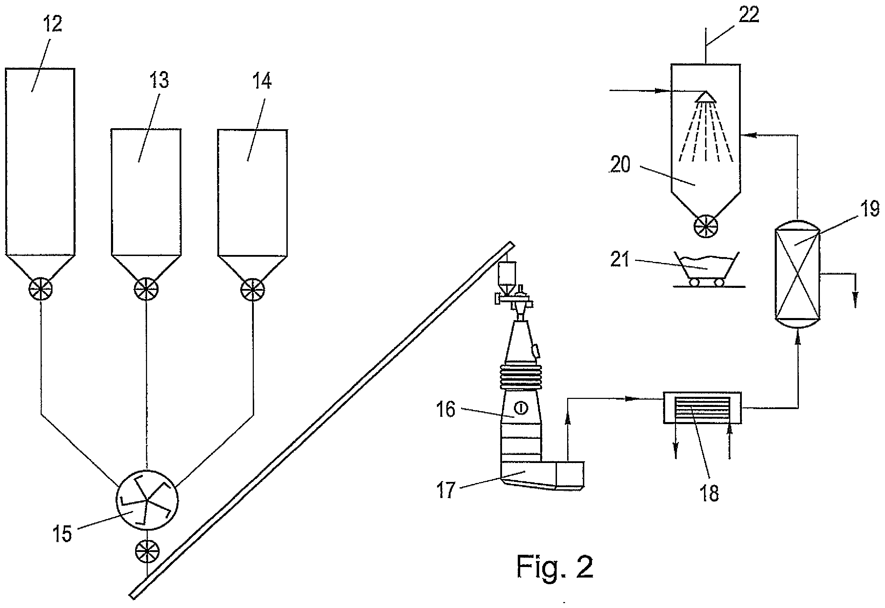

In Fig. 2 ist zu erkennen, dass bei einer vereinfachten Verfahrensführung Die Abfallstoffe mit Kalkträgern und Kohlestaub aus entsprechenden Vorratsbunkern 12, 13 und 14 einem Mischer 15 aufgegeben werden. Vom Mischer wird das Gemisch einer Aufgabevorrichtung eines Reduktionsreaktors 16 aufgegeben. Im Reduktionsreaktor 16 werden die Metalloxide reduziert du können als Roheisen und Zementschlacke am Tundish 17 abgestochen werden. Die heißen Gase werden bei Temperaturen von ca. 1600°C abgezogen und in einem Wärmetauscher 18 auf ungefähr 400°C abgekühlt. In einem entsprechenden Abscheider 19 können nun Schwermetalle, Alkalien und Halogene abgetrennt werden und das verbleibende Gas, das neben CO und H2 noch Phosphor enthält, wird einer Wasserquenche 20 zugeführt, wo der Phosphor kondensiert und als weißer Phosphor in einen entsprechenden Behälter 21 werden kann. Das verbleibende Brenngas bzw. Produktgas wird über den Abzug 22 abgezogen.

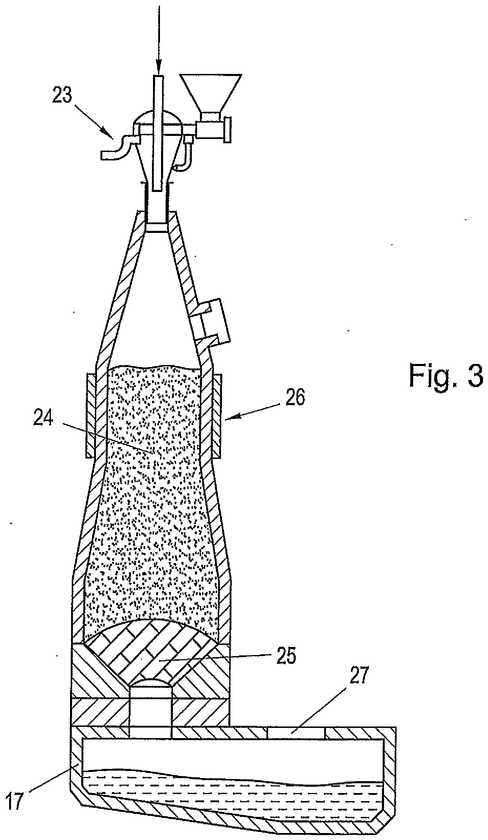

In Fig. 3 sind die Teile der Reduktionsvorrichtung deutlicher zu erkennen. Mit 23 ist eine Aufgabevorrichtung bezeichnet, über die die Ausgangsstoffe möglichst gleichmäßig einem Koks- und/oder Graphitbett 24 aufgegeben werden. Das Bett 24 ruht auf einem Verbau 25 aus Feuerfestmaterial und wird mittels der Spule 26 induktiv beheizt. Der Tundish 17 weist neben dem Abstich für die Eisenschmelze und die Zementschlacke einen Abzug 27 für die Produktgase auf, die in der Folge einer fraktionierten Kondensation unterworfen werden.

## Patentansprüche

1. Verfahren zum Aufarbeiten von organischen Abfallstoffen enthaltend Phosphoroxide und Metalloxide, insbesondere zum Aufarbeiten von Klärschlamm, bei welchem die Abfallstoffe mit Chlorträgern versetzt und anschließend bei einem Luftverhältnis von 0,85 ≤ λ ≤ 1,6 thermisch behandelt und zumindest partiell oxidiert und die gebildeten Metallchloride abgezogen und wiedergewonnen werden und die nach dem Abziehen der Metallchloride verbleibende Fraktion einer Reduktion zur Gewinnung von elementarem Phosphor unterzogen wird, wobei die mit den Chlorträgern versetzten Abfallstoffe zur Oxidation mit einem Trägergas über einen Zyklon in eine Brennkammer eingestoßen werden.

2. Verfahren nach Anspruch 1, **dadurch gekennzeichnet, dass** die thermische Behandlung bei Temperaturen von 1300-1600°C durchgeführt wird.

3. Verfahren nach Anspruch 1 oder 2, **dadurch gekennzeichnet, dass** zu den Abfallstoffen zusätzlich Kalk zugesetzt wird.

4. Verfahren nach einem der Ansprüche 1 bis 3, **dadurch gekennzeichnet, dass** als Trägergas ein Sauerstoffhaltiges Gas, insbesondere Heißwind eingesetzt wird.

5. Verfahren einem der Ansprüche 1 bis 4, **dadurch gekennzeichnet, dass** die Chlorträger aus der Gruppe bestehend aus chlorhaltigen Kunststoffen, Alkalichloriden, Erdalkalichloriden, Zementofenstaub und Stahlwerksstäuben gewählt sind.

6. Verfahren einem der Ansprüche 1 bis 5, **dadurch gekennzeichnet, dass** die Reduktion der nach dem Abziehen der Metalloxide verbleibenden Fraktion unter Verwendung einer zumindest teilweise induktiv beheizten Säule mit stückigem Koks und/oder Graphit durchgeführt wird und der entweichende elementare Phosphor abgezogen wird.

7. Verfahren nach einem der Ansprüche 1 bis 6 , **dadurch gekennzeichnet, dass** der abgezogene Phosphor durch Quenchen als weißer Phosphor gewonnen wird.

8. Verfahren nach einem der Ansprüche 6 oder 7, **dadurch gekennzeichnet, dass** das Redoxpotential der Säule durch Einblasen von Gasen geregelt und die Temperatur der Säule durch Regelung der elektrischen Leistung und durch Einblasen von Gasen eingestellt wird.

9. Verfahren nach einem der Ansprüche 1 bis 8, **dadurch gekennzeichnet, dass** die nach dem Abziehen der Metallchloride verbleibende Fraktion zur Gewinnung von Phosphoreisen mit Eisen bzw. Eisenoxid versetzt wird.

## Claims

1. Method for processing organic waste materials containing phosphor oxides and metal oxides, in particular for processing sewage sludge wherein chlorine-containing agents are added to the waste materials and, subsequently, heat treated at an air ratio of 0.85 ≤ λ ≤ 1.6, and oxidized at least partially, and the metal chlorides formed are removed and recycled and the fraction remaining after removing the metal chlorides is subjected to a reduction for obtaining elementary phosphorous wherein the waste materials to which chlorine-containing agents are added are fed into a combustion chamber via a cyclone in order to be oxidized by a carrier gas.

2. Method according to claim 1 **characterized in that** the heat treatment is carried out at temperatures of 1300-1600°C.

3. Method according to claim 1 or 2 **characterized in that** chalk is further added to the waste materials.

4. Method according to any one of claims 1 to 3 **characterized in that** an oxygen-containing gas, in particular hot blast, is used as the carrier gas.

5. Method according to any one of claims 1 to 4 **characterized in that** the chlorine-containing agent is selected from the group consisting of chlorine-containing plastics, alkali chlorides, alkaline earth chlorides, cement kiln dust and steal mill dust.

6. Method according to any one of claims 1 to 5 **characterized in that** the reduction of the fraction remaining after removing the metal oxides is carried out by using an at least partially inductively heated column with lumpy coke and/or graphite and the escaping elementary phosphorous is removed.

7. Method according to any one of claims 1 to 6 **characterized in that** the removed phosphorous is obtained as white phosphorous by quenching.

8. Method according to any one of claims 6 or 7 **characterized in that** the redox potential of the column is regulated by injecting gas and the temperature of the column is adjusted by controlling the electric power and by injecting gas.

9. Method according to any one of claims 1 to 8 **characterized in that** iron or iron oxide is added to the fraction remaining after removing the metal chlorides in order to obtain iron phosphide.

## Revendications

1. Procédé pour le traitement de déchets organiques contenant des oxydes de phosphore et des oxydes métalliques, en particulier pour le traitement de boues d'épuration, dans lequel les déchets sont adjoints de porteurs de chlore et puis traités thermiquement à une relation d'air de 0,85 ≤ λ ≤ 1,6 et oxydés au moins partiellement et les chlorures de métal formés sont soustraites et récupérés et la fraction restante après l'élimination des chlorures de métal est soumise à une réduction pour la récupération de phosphore élémentaire, les déchets adjoints de porteurs de chlore étant déchargés avec un gaz porteur par l'intermédiaire d'un cyclone dans une chambre de combustion pour l'oxydation.

2. Procédé selon la revendication 1, **caractérisé en ce que** le traitement thermique est effectué à des températures de 1300 à 1600°C.

3. Procédé selon la revendication 1 ou 2, **caractérisé en ce que** les déchets sont en outre adjoints de chaux.

4. Procédé selon l'une quelconque des revendications 1 à 3, **caractérisé en ce qu'**en tant que gaz porteur, un gaz contenant de l'oxygène, en particulier de l'air chaud est employé.

5. Procédé selon l'une quelconque des revendications 1 à 4, **caractérisé en ce que** le porteur de chlore est choisi parmi le groupe constitués par les matières plastiques contenant du chlore, les chlorures de métaux alcalins, les chlorures des métaux alcalinoterreux, la poussière de four à ciment et les poussières d'aciéries.

6. Procédé selon l'une quelconque des revendications 1 à 5, **caractérisé en ce que** la réduction de la fraction subsistant après l'élimination des oxydes métalliques est effectuée en employant une colonne chauffée au moins partiellement par induction avec du coke et / ou de la graphite en morceaux et le phosphore élémentaire s'échappant est retiré.

7. Procédé selon l'une quelconque des revendications 1 à 6, **caractérisé en ce que** le phosphore retiré est obtenu par trempe en tant que phosphore blanc.

8. Procédé selon l'une quelconque des revendications 6 ou 7, **caractérisé en ce que** le potentiel redox de la colonne est contrôlé par injection de gaz et la température de la colonne est ajustée par régulation de la puissance électrique et par injection de gaz.

9. Procédé selon l'une quelconque des revendications 1 à 8, **caractérisé en ce que** la fraction subsistant après l'éliminiation des oxydes métalliques est adjointe de fer ou d'oxyde de fer pour la récupération de phosphure de fer.
